(19) **Europäisches Patentamt**
**European Patent Office**
**Office européen des brevets**

(11) **EP 1 899 631 B1**

(12) **EUROPÄISCHE PATENTSCHRIFT**

(45) Veröffentlichungstag und Bekanntmachung des Hinweises auf die Patenterteilung:
**13.01.2010 Patentblatt 2010/02**

(51) Int Cl.:
*F16H 61/66* (2006.01)     *F16H 61/12* (2010.01)
*G01M 3/02* (2006.01)

(21) Anmeldenummer: **06742385.5**

(22) Anmeldetag: **26.05.2006**

(86) Internationale Anmeldenummer:
**PCT/DE2006/000907**

(87) Internationale Veröffentlichungsnummer:
**WO 2007/000126 (04.01.2007 Gazette 2007/01)**

(54) **VERFAHREN UND VORRICHTUNG ZUM ÜBERWACHEN DER BETRIEBSSICHERHEIT EINES DURCH REIBEINGRIFF DREHMOMENT ÜBERTRAGENDEN GETRIEBES**

METHOD AND DEVICE FOR MONITORING OPERATIONAL RELIABILITY OF A DRIVE WHICH TRANSMITS TORQUE BY MEANS OF FRICTIONAL ENGAGEMENT

PROCEDE ET DISPOSITIF POUR SURVEILLER LA FIABILITE D'UN ENGRENAGE TRANSMETTANT UN COUPLE DE ROTATION PAR FRICTION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **25.06.2005 DE 102005029568**

(43) Veröffentlichungstag der Anmeldung:
**19.03.2008 Patentblatt 2008/12**

(73) Patentinhaber: **LuK Lamellen und Kupplungsbau Beteiligungs KG**
**77815 Bühl (DE)**

(72) Erfinder: **VORNEHM, Martin**
**77815 Bühl (DE)**

(56) Entgegenhaltungen:
**EP-A- 1 085 311     EP-A- 1 225 371**
**EP-A- 1 273 899     US-B1- 6 547 692**

• **PATENT ABSTRACTS OF JAPAN Bd. 2003, Nr. 06, 3. Juni 2003 (2003-06-03) -& JP 2003 042251 A (TOYOTA CENTRAL RES & DEV LAB INC), 13. Februar 2003 (2003-02-13)**

**Beschreibung**

Die Erfindung betrifft ein Verfahren und eine Vorrichtung zum Überwachen der Betriebssicherheit eines durch Reibeingriff Drehmoment übertragenden Getriebes mit stufenlos veränderbarer Übersetzung.

Es gibt unterschiedliche Arten von durch Reibeingriff Drehmoment übertragenden Getrieben mit stufenlos veränderbarer Übersetzung, beispielsweise Reibradgetriebe, Reibringgetriebe, Kegelscheibenumschlingungsgetriebe usw. Diesen Getrieben gemeinsam ist, dass die durch Reibeingriff Kraft bzw. Drehmoment übertragenden Bauteile jeweils mit gegeneinander gepressten Flächenelementen in gegenseitiger Berührung sein müssen, damit eine Reibschluss möglich ist. Die im gegenseitigen Reibeingriff befindlichen Flächenelemente werden dabei in Folge der Anpressung, möglichem Schlupf und hohen Temperaturen stark beansprucht, was zu einer Schädigung der Oberfläche führen kann, die die Funktionstüchtigkeit des Getriebes beeinträchtigt.

Aus der Patentschrift US 6,547,692 B1, die die Oberbegriffe der unabhängigen Ansprüche 1 und 5 offenbart, ist ein System zur Einstellung der Spannung des Umschlingungsteils eines einem Fahrzeugmotor nachgelagerten, stufenlos verstellbaren Umschlingungsgetriebes beschrieben. Es sind dabei Mittel zur Steuerung bzw. Regelung des Fahrzeugmotors sowie Mittel zur Steuerung bzw. Regelung des Umschlingungsgetriebes vorgesehen. Der Kern der Erfindung besteht darin, dass eine Sicherheitsreserve für die Spannung des Umschlingungsteils nicht fest vorgegeben wird, sondern abhängig von verschiedenen Bedingungen bestimmt wird. Hierdurch gelangt man zu einer Verringerung des Reservedrucks der Bandspannungsregelung und dadurch zu einem besseren Getriebewirkungsgrad und somit zu einem verringerten Kraftstoffverbrauch.

Aus der europäischen Offenlegungsschrift EP 1 273 899 A2 ist ein Verfahren zum Bestimmen der Lebensdauer eines Antriebsriemens bekannt, wobei eine Vielzahl von die Schädigung des Antriebsriemens betreffende Werte verarbeitet werden. Am Ende des Verfahrens wird eine aus dem momentan erreichten Schädigungswert abgeleitete Größe angezeigt oder zur Weiterverarbeitung ausgegeben.

Der Erfindung liegt die Aufgabe zugrunde, ein Verfahren zum Überwachen der Betriebssicherheit eines durch Reibeingriff Drehmoment übertragenden Getriebes mit stufenlos veränderbarer Übersetzung zu schaffen, welches eine Aussage über die Betriebssicherheit zulässt und eine Warnung bzw. Gegenmaßnahmen ermöglicht, bevor die Betriebssicherheit beeinträchtigt ist. Der Erfindung liegt weiter die Aufgabe zugrunde, eine Vorrichtung zum Überwachen der Betriebssicherheit eines durch Reibeingriff Drehmoment übertragenden Getriebes mit stufenlos veränderbarer Übersetzung zu schaffen.

Der auf das Verfahren gerichtete Teil der Erfindungsaufgabe wird mit einem Verfahren zum Überwachen der Betriebssicherheit eines durch Reibeingriff Drehmoment übertragenden Getriebes mit stufenlos veränderbarer Übersetzung geschaffen, das folgende Schritte enthält:

- Bereitstellen eines Schädigungsmodells, das einen Schädigungswert in Abhängigkeit von für die Schädigung der durch Reibeingriff Drehmoment übertragenden Berührstellen relevanten Betriebsparametern enthält,
- Ermitteln der Werte der Betriebsparameter während des Betriebes,
- Bestimmen des erreichten Schädigungswertes aus den ermittelten Betriebsparametern, und
- Anzeigen einer aus dem momentan erreichten Schädigungswert abgeleiteten Größe, wobei das Getriebe derart gesteuert wird, dass ein Reibeingriff zwischen Berührstellen mit hoher Schädigung vermieden wird.

Erfindungsgemäß wird somit ein Schädigungsmodell eingesetzt, das eine Gesamtschädigung des Getriebes und/oder eine Schädigung der einzelnen in gegenseitigen Reibeingriff kommenden Oberflächenelemente angibt. Das Schädigungsmodell kann aus mathematischen Berechnungen, Prüfstandversuchen oder Kombination von beidem abgeleitet sein. Aus den jeweils während des Betriebs des Getriebes gemessenen Betriebsparametern kann anhand des Schädigungsmodells der jeweils erreichte momentane Schädigungswert berechnet werden. Für das Getriebe wird ein vorbestimmter Schädigungswert bzw. werden einzelnen Oberflächenbereichen zugeordnete Schädigungswerte festgelegt, die nicht überschritten werden dürfen. Der oder die momentanen Schädigungswerte können in ihrer Relation zu dem oder den zulässigen Schädigungswerten angezeigt oder ausgewertet werden, so dass jeweils eine Aussage über den Schädigungszustand des Getriebes möglich ist. Vorteilhafterweise wird bei Überschreiten eines zulässigen Schädigungswertes eine Warnung ausgelöst.

Vorteilhaft wird der am Ende eines Betriebszyklus erreichte Schädigungswert gespeichert, der dann den Startwert des Schädigungswertes zu Beginn eines nachfolgenden Betriebszyklus bildet.

Wenigstens einer der folgenden Betriebsparameter kann in dem Schädigungsmodel berücksichtigt werden: Temperatur der Stelle des Reibeingriffs, Anpressung zwischen den in Reibeingriff befindlichen Bauteilen, Schlupf zwischen den in Reibeingriff befindlichen Bauteilen, Ort des Reibeingriffs, Dauer des Reibeingriffs. Die Temperatur kann direkt gemessen und/oder aus der Anpressung, dem Schlupf und der Dauer berechnet werden.

Das erfindungsgemäße Verfahren kann für alle Arten von Drehmoment übertragenden Getrieben verwendet werden. Vorteilhaft wird es für ein Kegelscheibenumschlingungsgetriebe eingesetzt.

Eine Vorrichtung zum Überwachen der Betriebssicherheit eines durch Reibeingriff Drehmoment übertragenden Getriebes mit stufenlos veränderbarer Übersetzung enthält Sensoren zum Erfassen von für die Schädigung der durch Reibeingriff Drehmoment übertragenden Berührstellen relevanten Betriebsparametern, eine mit den Sensoren verbundene Auswerteeinheit, die anhand eines in ihr abgelegten Schädigungsmodells aus den ermittelten Werten der Betriebsparameter einen Schädigungswert bestimmt, eine Speichereinrichtung und ein Getriebesteuergerät, mit dem der Betrieb des Getriebes abhängig von dem oder den Schädigungswerten modifizierbar ist, wobei in der Speichereinrichtung der während eines Betriebszyklus erreichte Schädigungswert gespeichert wird, so dass er als Startwert für einen nachfolgenden Betriebszyklus zur Verfügung steht und wobei weiterhin die Vorrichtung eine Anzeigeeinrichtung zum Anzeigen einer aus dem momentan erreichten Schädigungswert abgeleiteten Größe enthält, und das Getriebesteuergerät das Getriebe derart steuert, dass ein Reibeingriff zwischen Berührstellen mit hoher Schädigung vermieden wird.

Die Erfindung wird im Folgenden anhand schematischer Zeichnungen beispielsweise und mit weiteren Einzelheiten erläutert.

In den Figuren stellen dar:

Figur 1   ein Blockschaltbild eines Kegelscheibenumschlingungsgetriebes mit einer Steuer- und Auswerteeinheit, und

Figur 2   Flussdiagramme zur Erläuterung des erfindungsgemäßen Verfahrens.

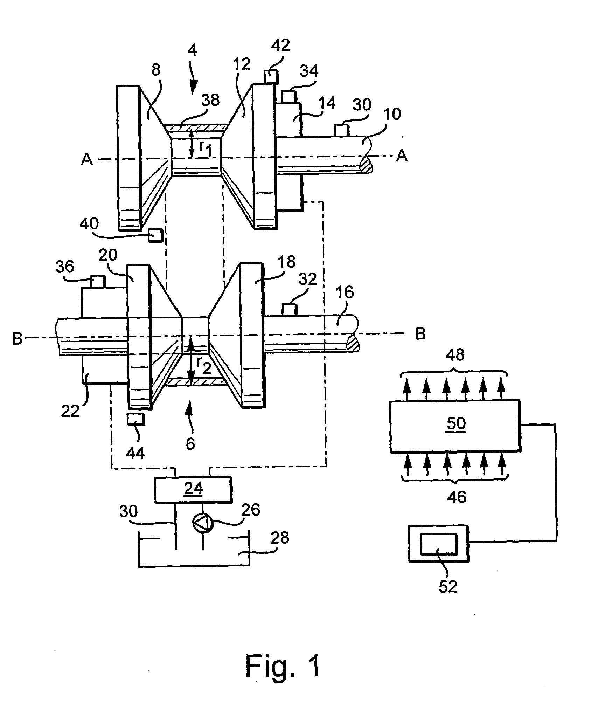

Gemäß Figur 1 weist ein in seinem Aufbau insgesamt bekanntes Kegelscheibenumschlingungsgetriebe zwei Kegelscheibenpaare 4, 6 auf, die um zueinander parallel Achsen A-A und B-B drehbar sind. Das Kegelscheibenpaar 4 weist eine Festscheibe 8 auf, die starr mit einer Welle 10 verbunden ist, und eine Stellscheibe 12, die mit der Welle 10 drehfest verbunden ist und mittels einer Hydraulikeinheit 14 relativ zur Welle 10 axial verschiebbar ist.

In ähnlicher, jedoch gegensinniger Weise weist das Kegelscheibenpaar 6 eine mit einer Welle 16 starr verbundene Festscheibe 18 und eine Stellscheibe 20 auf, die mit der Welle 16 drehfest und mittels einer Hydraulikeinheit 22 auf der Welle 16 axial verschiebbar ist.

Die Hydraulikeinheiten 14 und 22 werden über eine Ventilanordnung 24 mit Anpressdruck beaufschlagt, der von einer Pumpe 26 erzeugt wird, die Hydraulikmittel aus einem Vorratsbehälter 28 fördert, in den eine Rücklaufleitung 30 mündet.

Die Drehzahl der Wellen 10 und 16 werden mittels Drehzahlsensoren 30 und 32 erfasst. Der in den Hydraulikeinheiten 14 und 22 herrschende Druck, mit dem die jeweilige Stellscheibe in Richtung auf die Festscheibe gedrängt wird, wird mittels Drucksensoren 34 und 36 erfasst. Die Geschwindigkeit eines Umschlingungsmittels 38, das in reibschlüssiger Anlage an den Kegelscheiben ist, wird mittels eines Geschwindigkeitssensors 40 erfasst. Die jeweilige Stellung der Stellscheiben 12, 20 wird von Stellungssensoren 42, 44 erfasst.

Die genannten Sensoren sind mit Eingängen 46 einer Steuer- und Auswerteeinheit 50 verbunden, deren Ausgänge 48 die Ventilanordnung 24 sowie gegebenenfalls weitere, nicht dargestellte Elemente, wie eine automatische Kupplung usw. steuert. Weitere Eingänge der Steuer- und Auswerteeinheit sind beispielsweise mit einem Fahrpedalsensor, einem Bremspedalsensor und einem Getriebewählhebel des nicht dargestellten Fahrzeugs verbunden.

Aufbau und Funktion eines elektronisch gesteuerten Kegelscheibenumschlingungsgetriebes der beschriebenen Bauart einschließlich deren Steuerung sind an sich bekannt und werden daher nicht erläutert.

Die Steuer- und Auswerteeinheit, die einen Mikroprozessor mit zugehörigen Speichereinrichtungen enthält, ist hinsichtlich ihrer Funktion als Steuereinheit ebenfalls bekannt und wird daher nicht erläutert.

Die erfindungsgemäße Steuer- und Auswerteeinheit, an die eine Anzeigeeinheit 52 angeschlossen ist, enthält zusätzliche, vorwiegend durch Software implementierte Funktionsumfänge, die im Folgenden erläutert werden.

Die Beanspruchung einzelner bezüglich ihres Radius r1 bzw. r2 festgelegter Umfangsbereiche der Kegelscheiben 8, 12 bzw. 18, 20 der Kegelscheibenpaare 4 bzw. 6 werden abhängig vom jeweiligen Anpressdruck zwischen den Stirnflächen von den einzelnen Glieder des Umschlingungsmittels 38 gelenkig miteinander verbindenden Bolzen sowie dem Schlupf bzw. der Relativgeschwindigkeit zwischen den Stirnflächen der Bolzen und den Gegenflächen der Kegelflächen beansprucht. Umso größer der Anpressdruck und vor allem umso größer der Schlupf bei hohem Anpressdruck ist, umso mehr werden die Stirnflächen der Bolzen des Umschlingungsmittels 38 und die entsprechenden Gegenflächenelemente der Kegelflächen der Kegelscheiben geschädigt.

Der Anpressdruck zwischen den Stirnflächen und den Kegelflächen kann aus dem von den Sensoren 34 und 36 ermittelten Hydraulikdruck und der Geometrie der Anlage der Stirnflächen an den Kegelflächen bestimmt werden. Der Radius r1 bzw. r2 des jeweils beanspruchten Umfangsegments der Kegelflächen kann auch aus den Abständen zwischen den Kegelscheiben des jeweiligen Kegelscheibenpaars, die mittels der Sensoren 42 und 44 ermittelt werden, bestimmt werden. Der Schlupf zwischen dem Umschlingungsmittel 38 und dem jeweiligen Kegelscheibenpaar kann aus den von den Sensoren 30 und 32 ermittelten Drehzahlen und der vom Sensor 40 ermittelten Geschwindigkeit des Umschlingungsmittels festgestellt werden.

Für die Schädigung $S_B$ der Stirnflächen der Bolzen des Umschlingungsmittels 38 gilt beispielsweise die allgemeine Beziehung:

$$S_B = f_B\,(p,\,s,\,t),$$

wobei p der Anpressdruck ist, s der jeweilige Schlupf ist und t die Zeitdauer ist, während der der jeweilige Anpressdruck p und der jeweilige Schlupf s vorhanden sind.

Für die Schädigung $S_{Sr}$ eines Umfangelements mit dem Radius r einer Kegelfläche gilt beispielsweise:

$$S_{Sr} = f_S\,(p,\,s,\,t),$$

wobei der funktionale Zusammenhang $f_S$ wegen der unterschiedlichen Materialvolumina und Materialien im Allgemeinen anders als der funktionale Zusammenhang $f_B$ ist.

Die Funktionen $f_B$ und $f_S$ sind im Allgemeinen nicht linear. Die Schädigung steigt mit zunehmendem Produkt aus p und s im Allgemeinen exponentiell an. Die einzelnen während einer bestimmten Zeitdauer erfolgten Schädigungen addieren sich, so dass die Funktionen Integrale enthalten.

Die Funktionen $f_B$ und $f_S$ können analytisch funktional hergeleitet sein oder anhand von Prüfstandsversuchen ermittelt sein. Es können auch beide Verfahren angewendet werden, indem ein analytisch hergeleiteter Algorithmus durch Prüfstandsversuche parametriert und verifiziert wird.

In der Steuer- und Auswerteeinheit 50 sind die Funktionen $f_B$ und $f_S$ gespeichert, so dass der jeweilige Schädigungswert S, der während des Betriebs des Getriebes erzielt wird, in der Steuer- und Auswerteeinheit 50 berechnet werden kann. Wenn das Getriebe außer Betrieb gesetzt wird, wird der jeweilige erreichte Schädigungswert in einem nicht flüchtigen Speicher abgelegt, so dass er bei einer erneuten Inbetriebnahme als Startwert zur Verfügung steht. Weiter sind in der Steuer- und Auswerteeinheit 50 kritische Schädigungswerte gespeichert, bei deren Erreichen die Anzeigeeinheit 52 beispielsweise aktiviert wird und eine Warnung abgibt.

Der jeweilige, nach mehreren Betriebszyklen erzielte Schädigungswert kann unter Voraussetzung einer weiteren ähnlichen Betriebsweise extrapoliert werden, so dass eine Restlaufzeit bis zum Erreichen kritischer Schädigungswerte vorhergesagt und gegebenenfalls angezeigt werden kann.

Wenn in einzelnen radialen Umfangsbereichen besonders hohe Schädigungswerte erzielt werden, kann das Getriebe bzw. dessen Übersetzung derart gesteuert werden, dass die radialen Bereiche der Kegelscheibenflächen mit hoher Schädigung nur noch wenig oder nicht mehr eingesetzt werden, so dass eine möglichst gleichmäßige Schädigung und darüber eine hohe Lebensdauer erzielt wird.

Die geschilderten Funktionen $f_B$ und $f_S$ können an Stelle von p und s die Temperatur T an der Stelle des Reibschlusses enthalten, die beispielsweise aus p und s berechnet wird oder unmittelbar gemessen wird. Weiter kann als zusätzlicher Betriebsparameter die Drehzahl der jeweiligen Welle in der Funktion enthalten sein.

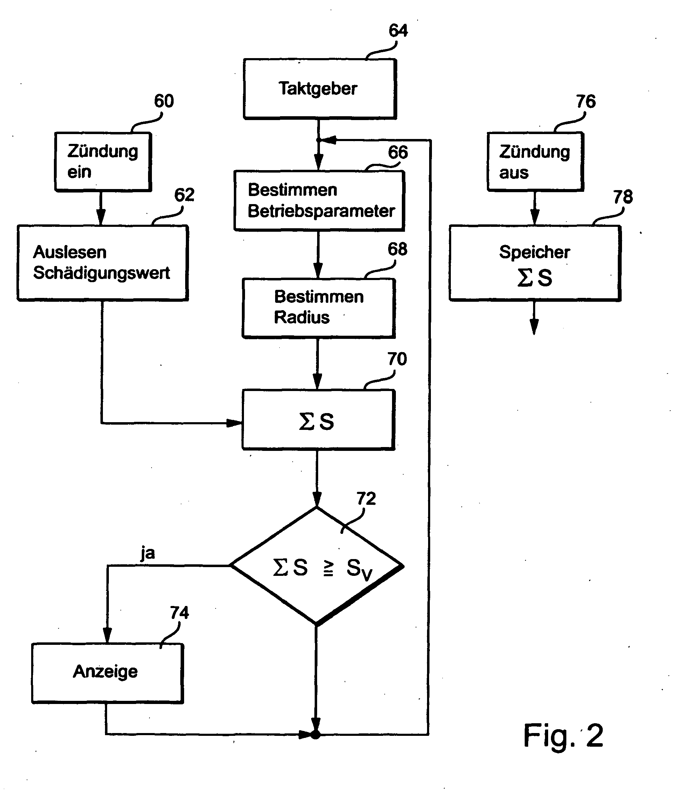

Anhand der Figur 2 wird im Folgenden ein Flussdiagramm des erfindungsgemäßen Verfahrens erläutert:

Wenn beispielsweise in einem Schritt 60 die Zündung des Fahrzeugs eingeschaltet wird bzw. das Fahrzeug in Betrieb genommen wird, werden in Schritt 62 die einzelnen Schädigungswerte aus einem nicht flüchtigen Speicher (z.B. ROM oder EEPROM) ausgelesen und im Schritt 64 wird ein Taktgeber aktiviert, der für jeweils aufeinanderfolgende Zeitelemente die Bestimmung der schädigungsrelevanten Betriebsparameter im Schritt 66 sowie die Bestimmung der jeweiligen Radien der in Reibeingriff mit den Bolzen des Umschlingungsmittels stehenden Ringbereiche der Kegelflächen steuert. Aus den in den Schritten 66 und 68 ermittelten Werten wird anhand des Schädigungsmodells das jeweils während des Zeitelements erfolgte zusätzliche Schädigungsinkrement berechnet und im Schritt 70 dem am Ende des vorherigen Zeitelements vorhandenen augenblicklichen Gesamtschädigungswert zuaddiert, wobei der Gesamtschädigungswert beim Start des Taktgebers 64 dem im Schritt 62 ausgelesenen Schädigungswert entspricht. Im Schritt 72 wird der jeweils in Schritt 70 ermittelte kumulierte Schädigungswert ES mit einem vorbestimmten kritischen Schädigungswert $S_V$ verglichen. Falls der kritische Schädigungswert erreicht ist, wird im Schritt 74 eine Anzeige aktiviert, die das Erreichen einer kritischen Schädigung anzeigt. Unter Berücksichtigung der kritischen Schädigung, die beispielsweise zu einer Änderung der Getriebesteuerung derart führen kann, dass ein Reibeingriff an Stellen, an denen eine kritische Schädigung erreicht ist, möglichst vermieden wird, läuft das System weiter, ebenso wie in dem Fall, dass im Schritt 72 festgestellt wird, dass der kritische Schädigungswert nicht oder noch nirgends erreicht ist.

Wenn im Schritt 76 die Zündung ausgeschaltet wird, wird der im Schritt 70 ermittelte Gesamtschädigungswert im Schritt 78 in dem nicht flüchtigen Speicher gespeichert, so dass er in einem nachfolgenden Betriebszyklus in einem Schritt 62 ausgelesen werden kann.

Es versteht sich, dass der Gesamtschädigungswert ES vorteilhafterweise jeweils stellvertretend für eine Vielzahl von Gesamtschädigungswerten besteht, die dem Schädigungswert der Stirnflächen der Bolzen des Umschlingungsmittels sowie der Schädigung der einzelnen, vom Radius abhängigen Ringflächenelemente der Kegelflächen der Kegelscheiben entsprechen.

**Bezugszeichenliste**

| | |
|---|---|
| 4 | Kegelscheibenpaar |
| 6 | Kegelscheibenpaar |
| 8 | Festscheibe |
| 10 | Welle |
| 12 | Stellscheibe |
| 14 | Hydraulikeinheit |
| 16 | Welle |
| 18 | Festscheibe |
| 20 | Stellscheibe |
| 22 | Hydraulikeinheit |
| 24 | Ventilanordnung |
| 26 | Pumpe |
| 28 | Vorratsbehälter |
| 30 | Drehzahlsensor |
| 32 | Drehzahlsensor |
| 34 | Drucksensor |
| 36 | Drucksensor |
| 38 | Umschlingungsmittel |
| 40 | Geschwindigkeitssensor |
| 42 | Stellungssensor |
| 44 | Stellungssensor |
| 46 | Eingänge |
| 48 | Ausgänge |
| 50 | Steuer und Auswerteeinheit |
| 52 | Anzeigeeinheit |

**Patentansprüche**

1. Verfahren zum Überwachen der Betriebssicherheit eines durch Reibeingriff Drehmoment übertragenden Getriebes mit stufenlos veränderbarer Übersetzung, enthaltend folgende Schritte:

   - Bereitstellen eines Schädigungsmodells, das einen Schädigungswert in Abhängigkeit von für die Schädigung der durch Reibeingriff Drehmoment übertragenden Berührstellen relevanten Betriebsparametern enthält,
   - Ermitteln der Werte der Betriebsparameter während des Betriebes,
   - Bestimmen des erreichten Schädigungswertes aus den ermittelten Betriebsparametern,
   - **gekennzeichnet durch** das Anzeigen einer aus dem momentan erreichten Schädigungswert abgeleiteten Größe, wobei das Getriebe derart gesteuert wird, dass ein Reibeingriff zwischen Berührstellen mit hoher Schädigung vermieden wird.

2. Verfahren nach Anspruch 1, wobei
   der am Ende eines Betriebszyklus erreichte Schädigungswert gespeichert wird und den Startwert des Schädigungswertes zu Beginn eines nachfolgenden Betriebszyklus bildet.

3. Verfahren nach Anspruch 1 oder 2, wobei wenigstens einer der folgenden Betriebsparameter in dem Schädigungsmodell berücksichtigt wird: Temperatur der Stelle des Reibeingriffs, Anpressung zwischen den in Reibeingriff befindlichen Bauteilen, Schlupf zwischen den in Reibeingriff befindlichen Bauteilen, Ort des Reibeingriffs, Dauer des Reibeingriffs.

4. Verfahren nach einem der Ansprüche 1 bis 3, wobei das durch Reibeingriff Drehmoment übertragende Getriebe mit stufenlos verstellbarer Übersetzung ein Kegelscheibenumschlingungsgetriebe ist.

5.  Vorrichtung zum Überwachen der Betriebssicherheit eines durch Reibeingriff Drehmoment übertragenden Getriebes mit stufenlos veränderbarer Übersetzung, enthaltend

    - Sensoren (30, 32, 34, 36, 42, 44) zum Erfassen von für die Schädigung der durch Reibeingriff Drehmoment übertragenden Berührstellen relevanten Betriebsparametern, eine mit den Sensoren verbundene Auswerteeinheit (50), die anhand eines in ihr abgelegten Schädigungsmodells aus den ermittelten Werten der Betriebsparameter einen Schädigungswert bestimmt,
    - eine Speichereinrichtung, und
    - ein Getriebesteuergerät, mit dem der Betrieb des Getriebes abhängig von dem oder den Schädigungswerten modifizierbar ist, **dadurch gekennzeichnet, dass** in der Speichereinrichtung der während eines Betriebszyklus erreichte Schädigungswert gespeichert wird, so dass er als Startwert für einen nachfolgenden Betriebszyklus zur Verfügung steht, dass die Vorrichtung eine Anzeigeeinrichtung (52) zum Anzeigen einer aus dem momentan erreichten Schädigungswert abgeleiteten Größe enthält, und dass das Getriebesteuergerät das Getriebe derart steuert, dass ein Reibeingriff zwischen Berührstellen mit hoher Schädigung vermieden wird.

**Claims**

1.  Method for monitoring the operational reliability of a transmission which transmits torque by means of frictional engagement and which has a continuously variable transmission ratio, comprising the following steps:

    - providing a damage model which contains a damage value as a function of operating parameters relevant to the damage of the contact points which transmit torque by frictional engagement,
    - determining the values of the operating parameters during operation,
    - establishing the attained damage value from the determined operating parameters,
    - **characterized by** the displaying of a variable derived from the presently attained damage value, with the transmission being controlled in such a way that frictional engagement between contact points with a high level of damage is prevented.

2.  Method according to Claim 1,
    with the damage value attained at the end of an operating cycle being stored and forming the start value of the damage value at the beginning of a subsequent operating cycle.

3.  Method according to Claim 1 or 2, with at least one of the following operating parameters being taken into consideration in the damage model:

    temperature of the point of frictional engagement, contact pressure between the components which are in frictional engagement, slip between the components which are in frictional engagement, location of the frictional engagement, duration of the frictional engagement.

4.  Method according to one of Claims 1 to 3, with the transmission which transmits torque by frictional engagement and which has a continuously variable transmission ratio being a continuously variable cone-pulley transmission.

5.  Device for monitoring the operational reliability of a transmission which transmits torque by means of frictional engagement and which has a continuously variable transmission ratio, comprising

    - sensors (30, 32, 34, 36, 42, 44) for measuring operating parameters relevant to the damage of the contact points which transmit torque by frictional engagement, an evaluating unit (50) which is connected to the sensors and which, on the basis of a damage model which is stored therein, establishes a damage value from the determined values of the operating parameters,
    - a memory device, and
    - a transmission control unit, by means of which the operation of the transmission may be modified depending on the damage value(s), **characterized in that** the damage value attained during an operating cycle is stored in the memory device such that said damage value is available as a start value for a subsequent operating cycle, **in that** the device has a display device (52) for displaying a variable derived from the presently attained damage value, and **in that** the transmission control unit controls the transmission in such a way that frictional engagement between contact points with a high level of damage is prevented.

**Revendications**

1. Procédé de surveillance de la fiabilité du fonctionnement d'une transmission qui transmet un couple de rotation par friction et dotée d'une démultiplication variable progressivement, le procédé comportant les étapes suivantes :

   - préparer un modèle de dégradation qui contient une valeur de dégradation qui est fonction de paramètres de fonctionnement concernés par les dégradations des emplacements de contact qui transmettent le couple de rotation par friction,
   - déterminer la valeur des paramètres de fonctionnement pendant le fonctionnement,
   - définir la valeur atteinte des dégradations à partir des paramètres de fonctionnement déterminés,

   **caractérisé par**
   l'affichage d'une grandeur dérivée de la valeur de dégradation atteinte à cet instant, la transmission étant commandée de manière à éviter que les emplacements de contact qui présentent de fortes dégradations soient engagés par friction.

2. Procédé selon la revendication 1, dans lequel la valeur de dégradation atteinte à la fin d'un cycle de fonctionnement est conservée en mémoire et forme la valeur initiale de la valeur de dégradation au début du cycle de fonctionnement suivant.

3. Procédé selon les revendications 1 ou 2, dans lequel au moins l'un des paramètres de fonctionnement suivants est pris en compte dans le modèle de dégradation : température de l'emplacement d'engagement par friction, poussée exercée entre les composants engagés par friction, glissement entre les composants engagés par friction, emplacement de l'engagement par friction et durée de l'engagement par friction.

4. Procédé selon l'une des revendications 1 à 3, dans lequel la transmission qui transmet un couple de rotation par friction et dotée d'une démultiplication ajustable progressivement est une transmission à courroie et poulies coniques.

5. Dispositif de surveillance de la fiabilité de fonctionnement d'une transmission qui transmet un couple de rotation par friction et dotée d'une démultiplication variable progressivement, le dispositif contenant .

   - des détecteurs (30, 32, 34, 36, 42, 44) qui détectent des paramètres de fonctionnement concernés par les dégradations des emplacements de contact qui transmettent le couple de rotation par friction,
   - une unité (50) d'évaluation reliée aux détecteurs et qui, à l'aide d'un modèle de dégradation qui y a été placé, détermine une valeur de dégradation à partir des valeurs des paramètres de fonctionnement qui ont été déterminées,
   - un dispositif de mémoire et
   - un appareil de commande de transmission qui permet de modifier le fonctionnement de la transmission en fonction de la ou des valeurs de dégradation,

   **caractérisé en ce que**
   la valeur de dégradation atteinte pendant un cycle de fonctionnement est conservée dans le dispositif de mémoire de manière à être disponible comme valeur initiale pour le cycle de fonctionnement suivant,
   **en ce que** le dispositif contient un dispositif d'affichage (52) qui affiche une grandeur qui est dérivée de la valeur de dégradation atteinte à cet instant et
   **en ce que** l'appareil de commande de transmission commande la transmission de manière à éviter que les emplacements de contact qui présentent de fortes dégradations soient engagés par friction.

Fig. 1

EP 1 899 631 B1

64
Taktgeber

60
Zündung
ein

62
Auslesen
Schädigungswert

66
Bestimmen
Betriebsparameter

68
Bestimmen
Radius

70
$\Sigma S$

72
$\Sigma S \gtreqless S_V$

ja

74
Anzeige

76
Zündung
aus

78
Speicher
$\Sigma S$

Fig. 2

9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6547692 B1
- EP 1273899 A2